# EUROPÄISCHE PATENTANMELDUNG

(11) **EP 4 270 732 A2**
(43) Veröffentlichungstag der Anmeldung: **01.11.2023**
(21) Anmeldenummer: 23192723.7
(22) Anmeldetag: 22.08.2023
(51) Int. Cl.: H02K 1/14, H02K 21/16

(54) **SCROLL-VAKUUMPUMPE MIT PERMANENTMAGNET-SYNCHRONMOTOR UND VERFAHREN ZUR HERSTELLUNG DER SCROLL-VAKUUMPUMPE**

(71) Anmelder: Pfeiffer Vacuum Technology AG, 35614 Asslar (DE)
(72) Erfinder: Die Erfindernennung liegt noch nicht vor
(74) Vertreter: Manitz Finsterwald Patent- und Rechtsanwaltspartnerschaft mbB

(57) **Zusammenfassung**

Eine Scroll-Vakuumpumpe mit einem in einen zylinderförmigen Innenraum eines Pumpengehäuses der Scroll-Vakuumpumpe angeordneten Permanentmagnet-Synchronmotor, insbesondere Dreiphasen-Synchronmotor, umfasst einen zumindest zweipoligen Rotor und einen den Rotor umgebenden ringförmigen Stator, wobei der Stator aus mehreren in Umfangsrichtung des Stators aufeinanderfolgenden, ringsegmentartig ausgebildeten Statorsegmenten zusammengesetzt ist, die von dem Pumpengehäuse eingefasst sind und die jeweils zumindest eine, insbesondere genau eine Spule eines elektrischen Leiters tragen, die vor dem Zusammensetzen der Statorsegmente um das jeweiligen Statorsegment gewickelt wurde.

## Beschreibung

Die Erfindung betrifft eine Scroll-Vakuumpumpe mit einem Permanentmagnet-Synchronmotor.

Scroll-Vakuumpumpen werden auch als Spiralvakuumpumpen oder Spiralfluidfördereinrichtungen bezeichnet und können zur Erzeugung eines Vakuums an einen Rezipienten angeschlossen werden.

Das einer Scroll-Vakuumpumpe zugrunde liegende Pumpprinzip ist aus dem Stand der Technik bekannt, beispielsweise aus der Druckschrift EP 3 153 706 B1, und wird nachstehend erläutert. Eine Pumpstufe einer Scroll-Vakuumpumpe weist zwei ineinander gesteckte, beispielsweise archimedische Spiralzylinder auf, welche auch als Spiralelemente bezeichnet werden. Jedes Spiralelement besteht aus einer Wand, die sich in einer axialen Richtung von einem Träger erstreckt und die eine dem Träger abgewandte freie Stirnseite aufweist. Die Spiralelemente sind so ineinandergesteckt, dass die Spiralelemente abschnittsweise halbmondförmige Volumina umschließen. Dabei steht eine Spirale fest, während die andere Spirale über einen Exzenterantrieb auf einer kreisförmigen Bahn bewegt werden kann. Die bewegbare Spirale führt somit eine sogenannte zentralsymmetrische Oszillation aus, was auch als "wobbeln" bezeichnet wird. Ein zwischen den Spiralzylindern eingeschlossenes halbmondförmiges Volumen wandert während des Wobbelns der beweglichen Spirale innerhalb der Spiralelemente weiter, wodurch mittels des wandernden Volumens Gas oder Flüssigkeit von einem radial außen liegenden Einlass nach radial innen zu einem in der Spiralenmitte liegenden Auslass gefördert wird.

Scroll-Vakuumpumpen weisen in der Regel einen gewöhnlichen Asynchronmotor als Antriebseinrichtung auf, da dieser leicht anzusteuern ist und ein ausreichendes Drehmoment liefert. Jedoch sind solche Motoren vergleichsweise teuer und wenig energieeffizient.

Es ist daher eine Aufgabe der Erfindung, eine wirtschaftlichere und effizientere Scroll-Vakuumpumpe bereitzustellen.

Die Aufgabe wird erfindungsgemäß durch eine Scroll-Vakuumpumpe mit einem in einen zylinderförmigen Innenraum eines Pumpengehäuses der Scroll-Vakuumpumpe angeordneten Permanentmagnet-Synchronmotor, insbesondere Dreiphasen-Synchronmotor, mit den Merkmalen des Anspruchs 1 gelöst. Die Scroll-Vakuumpumpe umfasst einen zumindest zweipoligen Rotor und einen den Rotor umgebenden ringförmigen Stator, wobei der Stator aus mehreren in Umfangsrichtung des Stators aufeinanderfolgenden, ringsegmentartig ausgebildeten Statorsegmenten zusammengesetzt ist, die von dem Pumpengehäuse eingefasst sind und die jeweils zumindest eine, insbesondere genau eine Spule eines elektrischen Leiters tragen, die vor dem Zusammensetzen der Statorsegmente um das jeweiligen Statorsegment gewickelt wurde.

Grundsätzlich sind Permanentmagnet-Synchronmotoren (sogenannte PMSM) bekannt. Zwar weisen PMSM gegenüber Asynchronmotoren u.a. einen besseren Wirkungsgrad auf. Sie sind aber auch mit Nachteilen behaftet. Bei PMSM tritt häufig eine elektromotorische Gegenkraft (Gegen-EMK) mit ausgeprägten Oberwellen auf. Es kommt nicht selten zu unerwünschten Drehschwingungen des Läufers, die durch eine ungleichmäßige Belastung oder Bestromung erregt werden können. Diese wiederum können zu Fluktuationen des erzeugten Drehmoments führen.

Bei Drehschieber-, Hubkolben-, Wälzkolben- oder Schraubenpumpen mögen diese Nachteile beherrschbar sein oder bauartbedingt nicht zu sehr ins Gewicht fallen. Der Einsatz von PMSM bei Scroll-Vakuumpumpen wurde aber bislang aufgrund der vorstehend beschriebenen Nachteile dieses Motortyps und des speziellen Konstruktionsprinzips dieser Pumpen nicht in Erwägung gezogen. Gerade die konstruktionsbedingt nicht immer zu vermeidenden Oberschwingungen der Gegen-EMK wurde als äußerst problematisch angesehen.

Überraschend wurde aber festgestellt, dass sich PMSM in vielen Anwendungen besser als herkömmliche Asynchronmotoren als Antriebseinrichtung für Scroll-Vakuumpumpen eignen, da die Vorteile dieses Motorentyps deren konstruktionsbedingten Nachteile kompensieren. Die Ablehnung von PMSM im Bereich von Scroll-Vakuumpumpen beruht also auf einem lange zementierten Vorurteil, das die Erfinder überwunden haben.

Weitere Ausführungsformen der Erfindung sind in den Ansprüchen, der Beschreibung und den beigefügten Zeichnungen angegeben.

Gemäß einer Ausführungsform ist die Scroll-Vakuumpumpe in einem Drehzahlbereich von 1000 rpm bis 3500 rpm, bevorzugt 1500 rpm bis 3000, besonderes bevorzugt 2200 rpm bis 2800 rpm betrieben, beispielsweise bei einem Einsatz als Vorvakuumpumpe. Die Erfinder haben erkannt, dass in diesem Drehzahlbereich die besagte Oberwellen der Gegen-EMK weniger relevant bzw. ausgeprägt sind, so dass sie einem Einsatz einer PMSM bei einer Scroll-Vakuumpumpe nicht im Wege stehen.

Bevorzugt ist die Scroll-Vakuumpumpe sensorlos betreibbar. Dadurch kann die Pumpe kostengünstiger hergestellt werden.

Es können weniger als 13, insbesondere 9 Statorsegmente und ein Rotor mit weniger als 10 Polen, insbesondere ein 6-poliger Rotor, vorgesehen sein.

Die einzelnen Statorsegmente sind bevorzugt aus einer Mehrzahl von gestanzten Blechteilen gefertigt, die speziell an die physikalischen Randbedingungen der Pumpe angepasst sind. Insbesondere können die Blechteile stanzpaketiert sein. In anderen Worten können die Blechteile durch Stanzen zu einem Statorsegment übereinander gestapelt und verbunden werden. Diese Herstellungsmethode ist besonders wirtschaftlich.

Jedes Statorsegment kann einen sich radial erstreckenden Tragabschnitt aufweisen, an dem radial außen liegend ein erster sowie ein zweiter bogenförmiger Kontaktabschnitt und radial innen liegend ein erster sowie ein zweiter Endabschnitt angeordnet sind, wobei der erste Kontaktabschnitt sowie der erste Endabschnitt entgegen der Umfangsrichtung und der zweite Kontaktabschnitt sowie der zweite Endabschnitt in Umfangsrichtung von dem Tragabschnitt abstehen. Mit anderen Worten stehen der erste Kontaktabschnitt und der zweite Kontaktabschnitt - in Umfangsrichtung gesehen - in entgegengesetzten Richtungen von dem Tragabschnitt ab. Analoges gilt für den ersten Endabschnitt und den zweiten Endabschnitt. Dabei können der erste Kontaktabschnitt, der zweite Kontaktabschnitt, der erste Endabschnitt und/oder der zweite Endabschnitt jeweils eine radiale Abmessung aufweisen, die in Umfangsrichtung konstant ist. Bevorzugt weisen jedoch der erste Kontaktabschnitt und der zweite Kontaktabschnitt jeweils eine radiale Abmessung auf, die in Umfangsrichtung konstant ist und der erste Endabschnitt und der zweite Endabschnitt weisen jeweils eine radiale Abmessung auf, die in Umfangsrichtung nicht konstant ist. Insbesondere können sich der erste Endabschnitt und der zweite Endabschnitt ausgehend von dem Tragabschnitt verjüngen.

Zusätzlich oder alternativ kann im Stator der erste Kontaktabschnitt eines jeweiligen Statorsegments den zweiten Kontaktabschnitt eines in Umfangsrichtung des Stators vorhergehenden Statorsegments kontaktieren, und der zweite Kontaktabschnitt des jeweiligen Statorsegments kann den ersten Kontaktabschnitt eines in Umfangsrichtung nachfolgenden Statorsegments kontaktieren. Ferner kann zur Bildung einer formschlüssigen Verbindung zwischen den ersten und zweiten Kontaktabschnitten zweier in Umfangsrichtung des Stators aufeinanderfolgender Statorsegmente der erste Kontaktabschnitt eines Statorsegments einen Fortsatz und der zweite Kontaktabschnitt desselben Statorsegments eine zu dem Fortsatz komplementäre Ausnehmung aufweisen, wobei der Fortsatz sich in radialer Richtung über die gesamte radiale Abmessung des ersten Kontaktabschnitts erstreckt und ein freies Ende aufweist, in Richtung dessen sich der Fortsatz keilförmig verjüngt.

Zudem kann jedes Statorsegment an denjenigen Seiten, die in Umfangsrichtung des Stators gesehen einem vorhergehenden bzw. einem nachfolgenden Statorsegment zugewandt sind, jeweils eine Aussparung aufweisen, und eine um ein Statorsegment gewickelte Spule in den Aussparungen des Statorsegments aufgenommen sein.

Vorteilhaft ist es, wenn dabei die Spule derart um das Statorsegment gewickelt ist, dass die Aussparungen zumindest annähernd vollständig von der Spule ausgefüllt sind. Insbesondere können die Aussparungen einen Füllfaktor von mehr als 30 Prozent, bevorzugt mehr als 35 Prozent, weiter bevorzugt mehr als 40 Prozent, noch weiter bevorzugt mehr als 45 Prozent, noch weiter bevorzugt mehr als 50 Prozent und noch weiter bevorzugt mehr als 55 Prozent, aufweisen. Durch diese besonders dichte Ausgestaltung der Wicklung kann der Ohm'sche Widerstand einer Phase um ca. 50 Prozent reduziert werden, was eine Energieeinsparung von nahezu 10% ermöglicht.

Die Aufgabe wird zudem durch ein Verfahren zur Herstellung einer Scroll-Vakuumpumpe gemäß Anspruch 10 gelöst. Das Verfahren umfasst das Bewickeln der Statorsegmente mit einem Wickeldraht, das Zusammensetzen der bewickelten Statorsegmente zu einem Stator und das Anordnen des zusammengesetzten Stators in einem zylinderförmigen Pumpengehäuse der Scroll-Vakuumpumpe.

Der Wickeldraht kann nach dem Bewickeln der Statorsegmente durch Träufeln und/oder Tauchen und/oder Vergießen an den Statorsegmenten fixiert werden. Der Wickeldraht kann dabei einen Backlackdraht umfassen, wobei jedes der Statorsegmente einzeln mit dem Backlackdraht bewickelt werden kann und wobei nach dem Bewickeln der Backlackdraht verbacken werden kann. Dadurch lässt sich der Wickeldraht besonders einfach und fest an den Segmenten fixieren.

Das Pumpengehäuse kann vor dem Anordnen des zusammengesetzten Stators in dem Pumpengehäuse erwärmt werden. Insbesondere kann der Stator in dem Pumpengehäuse durch Einschrumpfen montiert werden, was ein besonders einfacher und effizienter Montageprozess ist, der besonders effizient ist, wenn der Stator vor dem Einbringen gekühlt wird.

Ferner kann der zusammengesetzte Stator in einem Metallring bzw. Montagering positioniert werden, bevor er in dem Pumpengehäuse angeordnet wird, wobei der Metallring auf das Pumpengehäuse aufgesetzt wird und der in dem Metallring positionierte Stator zum Anordnen in dem Pumpengehäuse in das Pumpengehäuse gedrückt wird. Dies kann insbesondere mittels eines Montagestempels geschehen, der in axialer Richtung auf Metallflächen des Stators drückt.

Der zusammengesetzte Stator kann zum Anordnen in dem Pumpengehäuse bis zu einer axialen Anschlagposition gedrückt werden, insbesondere bis der Stator an einem an einer Innenseite des Pumpengehäuses ausgebildeten axialen Anschlag anliegt. Dies stellt sicher, dass der Stator an seiner vorgesehenen Endposition im Gehäuse montiert wird.

Nachfolgend wird die Erfindung beispielhaft anhand vorteilhafter Ausführungsformen unter Bezugnahme auf die beigefügten Zeichnungen beschrieben. Es zeigen, jeweils schematisch:
- Fig. 1: eine Querschnittansicht eines aus Statorsegmenten zusammengesetzten Stators ohne Spulen;
- Fig. 2: eine perspektivische Ansicht eines gestanzten Blechteils und eines Statorsegments;
- Fig. 3: eine perspektivische Ansicht eines zusammengesetzten Stators mit bewickelten Statorsegmenten; und
- Fig. 4: eine beispielhafte Darstellung eines Montageprozesses des Stators in das Pumpengehäuse.

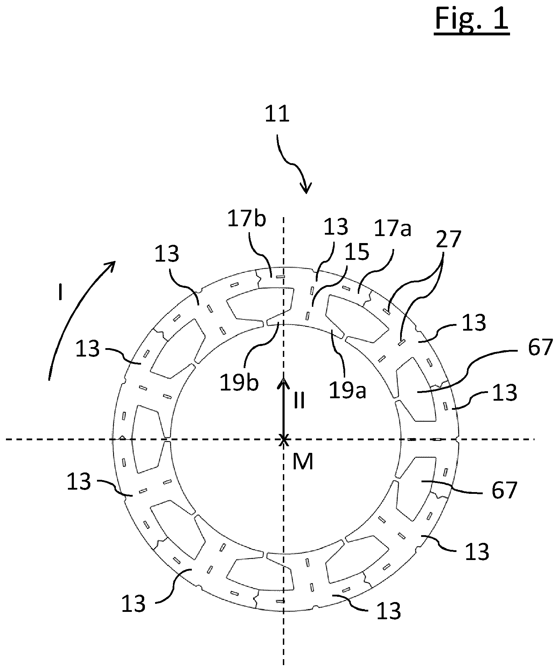

Der in Fig. 1 gezeigte Stator 11 ist aus mehreren in Umfangsrichtung I des Stators 11 aufeinanderfolgenden Statorsegmenten 13 zusammengesetzt, die von ihrer Grundform her ringsegmentartig ausgebildet sind, so dass der Stator 11 eine von der Grundform her ringförmige Struktur aufweist. In zusammengesetztem Zustand des Stators 11 liegen die Statorsegmente 13 formschlüssig aneinander und bilden Nuten 67 für Spulen 29 aus.

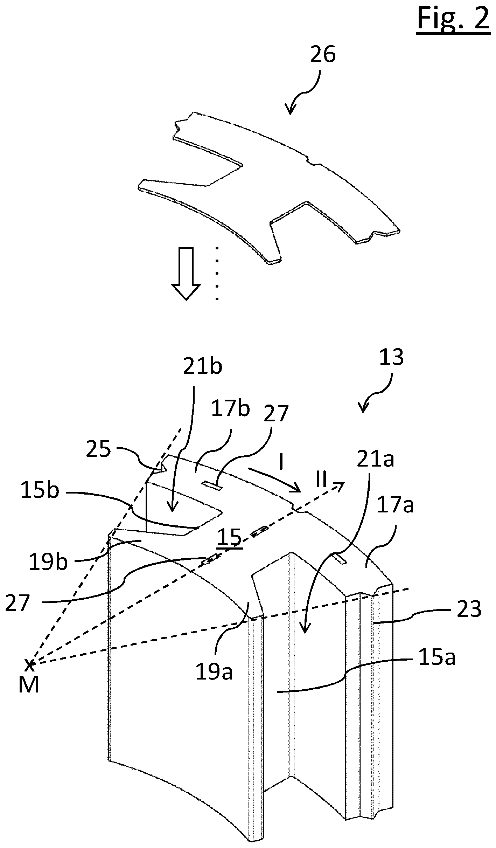

Fig. 2 zeigt entsprechend ein einzelnes Statorsegment 13. Jedes Statorsegment 13 umfasst wiederum eine Mehrzahl übereinander angeordneter und miteinander verbundener Blechteile 26. Insbesondere werden die Blechteile 26 durch Stanzen aus Blechen erzeugt. Die Blechteile 26 werden dann miteinander verbunden (paketiert), um die Statorsegmente 13 zu bilden. Die Verbindung kann ebenfalls durch einen Stanzprozess erfolgen (siehe Stanzvertiefungen 27). Die Blechteile 26 sind Gleichteile und bevorzugt aus einem Metall wie Stahl gefertigt. Die Blechteile 26 können aber auch auf andere Art und Weise miteinander verbunden werden und/oder das Statorsegment 13 kann aus einem Stück gefertigt sein.

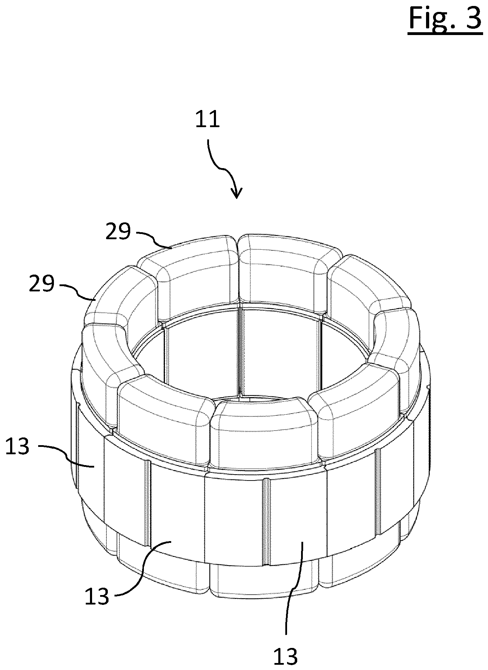

Wie in den Fig. 1 und 2 gezeigt ist, ist jedes Statorsegment 13 in Art einer DoppelT-Struktur ausgebildet. Bezogen auf eine radiale Richtung II weist jedes Statorsegment 13 einen vom Querschnitt her zumindest annähernd rechteckigen Tragabschnitt 15 auf. Die radiale Richtung II ist als eine Richtung definiert, die von einem Mittelpunkt M des Stators 11 nach außen zeigt (vgl. Pfeil in Fig. 1). Um den Tragabschnitt 15 werden Windungen einer Spule 29 herum gewickelt, wie in Fig. 3 gezeigt ist. Der Tragabschnitt 15 weist eine erste Seite 15a und eine zweite Seite 15b auf. Die erste Seite 15a weist entgegen der Umfangsrichtung I, d.h. entgegen dem Urzeigersinn in Fig. 1 und 2, wohingegen die zweite Seite 15b in Umfangsrichtung weist.

Am Tragabschnitt 15 sind ein erster Kontaktabschnitt 17a und ein zweiter Kontaktabschnitt 17b angeordnet, die in radialer Richtung II gesehen radial außen liegen. Dabei sind die beiden Kontaktabschnitte 17a und 17b entsprechend dem Außenradius des aus den Statorsegmenten 13 zusammengesetzten Stators 11 gebogen, wobei der erste Kontaktabschnitt 17a entgegen der Umfangsrichtung I über die erste Seite 15a des Tragabschnitts 15 hinausragt. Der zweite Kontaktabschnitt 17b ragt in Umfangsrichtung I über die zweite Seite 15b des Tragabschnitts 15 hinaus, wie in Fig. 2 zu sehen ist.

Am Tragabschnitt 15 sind zudem ein erster und ein zweiter Endabschnitt 19a, 19b angeordnet. Dabei ragt der erste Endabschnitt 19a entgegen der Umfangsrichtung I über die erste Seite 15a des Tragabschnitts 15 hinaus. Der zweite Endabschnitt 19b ragt in Umfangsrichtung I gesehen über die zweite Seite 15b des Tragabschnitts 15 hinaus.

Das Statorsegment 13 ist von seiner Grundform her ringsegmentartig ausgebildet. Abweichend von der ringsegmentartigen Form weist jedes Statorsegment 13 allerdings im Bereich der ersten Seite 15a eine erste Aussparung 21a auf, die in radialer Richtung gesehen durch den ersten Kontaktabschnitt 17a sowie den ersten Endabschnitt 19a begrenzt wird. Dementsprechend weist jedes Statorsegment 13 im Bereich seiner zweiten Seite 15b eine zweite Aussparung 21b auf, die in radialer Richtung von dem zweiten Kontaktabschnitt17b und dem zweiten Endabschnitt 19b begrenzt wird.

Wie die Fig. 2 zeigt, weist der erste Kontaktabschnitt 17a jedes Statorsegments 13 an seinem äußeren Ende einen Fortsatz 23 auf. Der zweite Kontaktabschnitt 17b weist an seinem äußeren Ende eine Ausnehmung 25 auf, die zu dem Fortsatz 23 komplementär ausgebildet ist.

Zur Herstellung des in Fig. 3 gezeigten Stators 11 wird dieser aus den Statorsegmenten 13 zusammengesetzt. Dabei wird die wenigstens eine Spule 29 vor dem Zusammensetzen um das jeweilige Statorsegment 13 gewickelt, und zwar bevorzugt derart, dass die Aussparungen 21a, 21b wenigstens annähernd vollständig von der Spule 29 ausgefüllt sind und das elektrisch leitende Material, wie etwa Kupfer, in den Wicklungen einen möglichst hohen Füllfaktor in den Aussparungen 21a, 21b erreicht. Der Wickeldraht der Spule 29 kann ein Backlackdraht sein.

Vorzugsweise wird ein Füllfaktor im Bereich von 30 bis über 55 Prozent realisiert. Durch den hohen Füllfaktor kann der ohmsche Widerstand in den Wicklungen gering gehalten werden, so dass im Betrieb nur geringe ohmsche Verluste in den Wicklungen auftreten, wodurch die Erwärmung gering gehalten und die Leistungsfähigkeit des Elektromotors erhöht werden kann.

Zur Berechnung des Füllfaktors in einer Aussparung 21a, 21b werden die durch eine Ebene verlaufenden Querschnittsflächen des elektrisch leitenden Materials der Wicklungen ins Verhältnis gesetzt zu der in der Ebene der jeweiligen Aussparung 21a, 21b insgesamt zur Verfügung stehenden Querschnittsfläche. Wenn zur Ermittlung des Füllfaktors auch die Isolationsschichten der Wicklungen miteinbezogen werden, ergeben sich höhere Füllfaktoren von bis nahezu 100 Prozent.

Wie in Fig. 1 gezeigt ist, werden die Statorsegmente 13 so zum Stator 11 zusammengesetzt, dass der Fortsatz 23 am ersten Kontaktabschnitt 17a eines Statorsegments 13 in die Ausnehmung 25 eines zweiten Kontaktabschnitts 17b eines in Umfangsrichtung I gesehen vorgeordneten Statorsegments 13 eingreift. Auf diese Weise werden die Statorsegmente 13 formschlüssig unter Ausbildung von Nuten 67 zur Aufnahme der Spulen 29 miteinander verbunden. Der von den Statorsegmenten 13 gebildete ringförmige Stator 11 weist somit eine intrinsische Stabilität auf.

Außerdem liegen bei dem Stator 11 die Kontaktabschnitte 17a, 17b aufeinanderfolgender Statorsegmente 13 aneinander an, so dass ein in Umfangsrichtung I gesehen geschlossenes Joch gebildet wird, wie Fig. 1 zeigt.

Bei dem Stator 11 bilden die Aussparungen 21a, 21b zweier aneinander liegender Statorsegmente 13 jeweils eine Nut 67, so dass der Stator 11 insgesamt Q = 9 Nuten aufweist. Außerdem kann bei der realisierten Einzelzahnwicklung erreicht werden, dass der Quotient zwischen der Nutzahl Q = 9 und dem Produkt aus der Polzahl 2*p = 6 des Rotors und einer Anzahl an elektrischen Phasen m = 3 eine gebrochene Zahl r = Q/(2p*m) = 1/2 ist. Diese Ausführungsform ist besonders vorteilhaft, da hier Oberwellen und Vibrationen eine überraschend geringe Rolle spielen.

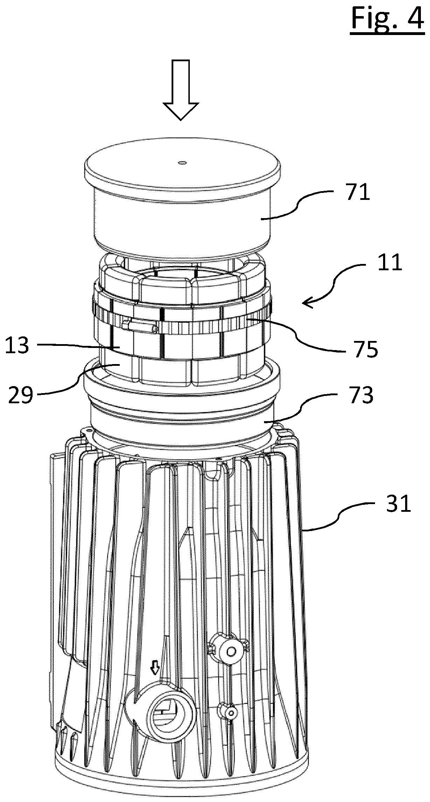

Wie in Fig. 4 gezeigt ist, werden die Statorsegmente 13 außerhalb des Gehäuses 31 zum Stator 11 zusammengesetzt und der Stator 11 wird dann in das Gehäuse 31 eingebaut. Dazu werden die bewickelten Statorsegmente 13 zuerst mittels einer Schlauchschelle 75 fixiert und dann in einen Metallring 73 eingesetzt. Der Innendurchmesser des Gehäuses 31 und der Außendurchmesser des Stators 11 weisen relativ zueinander eine Übermaßpassung auf, so dass zwischen dem Stator 11 und dem Gehäuse 31 eine Pressverbindung ausgebildet werden kann. Dazu wird der Stator 11 mittels eines Werkzeugs, insbesondere eines Montagestempels 71, in das zuvor erwärmte Gehäuse 31 gedrückt (siehe Kraft F), bis der Stator 11 an einer axialen Anschlagposition anliegt. Wenn das Gehäuse 31 dann abkühlt, schrumpft es aufgrund der Übermaßpassung auf den Stator 11 auf. Um ovale Verformungen des Stators 11 beim Einbau zu vermeiden, ist eine möglichst gleichmäßige, radiale Materialverteilung des Gehäuses 31 im Bereich der Statorsegmente 13 von Vorteil.

### Bezugszeichenliste:

- 11: Stator
- 13: Statorsegment
- 15: Tragabschnitt
- 15a: erste Seite
- 15b: zweite Seite
- 17a: erster Kontaktabschnitt
- 17b: zweiter Kontaktabschnitt
- 19a: erster Endabschnitt
- 19b: zweiter Endabschnitt
- 21a: erste Aussparung
- 21b: zweite Aussparung
- 23: Fortsatz
- 25: Ausnehmung
- 26: Blechteil
- 27: Stanzvertiefung
- 29: Spule
- 31: Gehäuse
- 67: Nut
- 71: Montagestempel
- 73: Metallring
- 75: Schlauchschelle
- I: Umfangsrichtung
- II: radiale Richtung
- F: axiale Kraft
- M: Mittelpunkt

## Patentansprüche

1. Scroll-Vakuumpumpe mit einem in einen zylinderförmigen Innenraum eines Pumpengehäuses (31) der Scroll-Vakuumpumpe angeordneten Permanentmagnet-Synchronmotor (PMSM), insbesondere Dreiphasen-Synchronmotor, umfassend
einen zumindest zweipoligen Rotor, und
einen den Rotor umgebenden ringförmigen Stator (11),
wobei der Stator (11) aus mehreren in Umfangsrichtung (I) des Stators aufeinanderfolgenden, ringsegmentartig ausgebildeten Statorsegmenten (13) zusammengesetzt ist, die von dem Pumpengehäuse (31) eingefasst sind und die jeweils zumindest eine, insbesondere genau eine Spule eines elektrischen Leiters tragen, die vor dem Zusammensetzen der Statorsegmente (13) um das jeweiligen Statorsegment (13) gewickelt wurde.

2. Scroll-Vakuumpumpe nach Anspruch 1,
wobei die Scroll-Vakuumpumpe in einem Drehzahlbereich von 1000 rpm bis 3500 rpm, bevorzugt 1500 rpm bis 3000, besonderes bevorzugt 2200 rpm bis 2800 rpm betreibbar ist.

3. Scroll-Vakuumpumpe nach Anspruch 1 oder 2,
wobei die Scroll-Vakuumpumpe sensorlos betreibbar ist.

4. Scroll-Vakuumpumpe nach zumindest einem der vorherigen Ansprüche, wobei weniger als 13, insbesondere 9 Statorsegmente (13) und ein Rotor mit weniger als 10 Polen, insbesondere ein 6-poliger Rotor vorgesehen sind.

5. Scroll-Vakuumpumpe nach zumindest einem der vorherigen Ansprüche, wobei die einzelnen Statorsegmente (13) aus einer Mehrzahl von gestanzten Blechteilen (26) gefertigt sind,
insbesondere wobei die Blechteile (26) stanzpaketiert sind.

6. Scroll-Vakuumpumpe nach zumindest einem der vorherigen Ansprüche, wobei jedes Statorsegment (13) einen sich radial erstreckenden Tragabschnitt (15) aufweist, an dem radial außen liegend ein erster sowie ein zweiter bogenförmiger Kontaktabschnitt (17a, 17b) und radial innen liegend ein erster sowie ein zweiter Endabschnitt (19a, 19b) angeordnet sind, wobei der erste Kontaktabschnitt (17a) sowie der erste Endabschnitt (19a) entgegen der Umfangsrichtung und der zweite Kontaktabschnitt (17b) sowie der zweite Endabschnitt (19b) in Umfangsrichtung (I) von dem Tragabschnitt (15) abstehen,
insbesondere wobei der erste Kontaktabschnitt (17a) und der zweite Kontaktabschnitt (17b) jeweils eine radiale Abmessung aufweisen, die in Umfangsrichtung (I) konstant ist und der erste Endabschnitt (19a) und der zweite Endabschnitt (19b) jeweils eine radiale Abmessung aufweisen, die in Umfangsrichtung (I) nicht konstant ist,
insbesondere wobei sich der erste Endabschnitt (19a) entgegen der Umfangsrichtung (I) verjüngt und sich der zweite Endabschnitt (19b) in Umfangsrichtung (I) verjüngt.

7. Scroll-Vakuumpumpe nach zumindest einem der vorherigen Ansprüche, wobei im Stator (11) der erste Kontaktabschnitt (17a) eines jeweiligen Statorsegments (13) den zweiten Kontaktabschnitt (17b) eines in Umfangsrichtung (I) des Stators (11) vorhergehenden Statorsegments (13) kontaktiert, wobei der zweite Kontaktabschnitt (17b) des jeweiligen Statorsegments (13) den ersten Kontaktabschnitt (17a) eines in Umfangsrichtung (I) nachfolgenden Statorsegments (13) kontaktiert,
wobei zur Bildung einer formschlüssigen Verbindung zwischen den ersten und zweiten Kontaktabschnitten (17a, 17b) zweier in Umfangsrichtung (I) des Stators (11) aufeinanderfolgender Statorsegmente (13) der erste Kontaktabschnitt (17a) eines Statorsegments (13) einen Fortsatz (23) und der zweite Kontaktabschnitt (17b) desselben Statorsegments (13) eine zu dem Fortsatz (23) komplementäre Ausnehmung (25) aufweist, und
wobei der Fortsatz (23) sich in radialer Richtung über die gesamte radiale Abmessung des ersten Kontaktabschnitts (17a) erstreckt und ein freies Ende aufweist, in Richtung dessen sich der Fortsatz (23) keilförmig verjüngt.

8. Scroll-Vakuumpumpe nach zumindest einem der vorherigen Ansprüche, wobei jedes Statorsegment (13) an denjenigen Seiten (15a, 15b), die in Umfangsrichtung (I) des Stators (11) gesehen einem vorhergehenden bzw. einem nachfolgenden Statorsegment (13) zugewandt sind, jeweils eine Aussparung (21a, 21b) aufweist, und eine um ein Statorsegment (13) gewickelte Spule (29) in den Aussparungen (21a, 21b) des Statorsegments (13) aufgenommen ist.

9. Scroll-Vakuumpumpe nach zumindest einem der vorherigen Ansprüche, wobei die Spule (29) derart um das Statorsegment (13) gewickelt ist, dass die Aussparungen (21a, 21b) zumindest annähernd vollständig von der Spule (29) ausgefüllt sind,
insbesondere wobei die Aussparungen (21a, 21b) einen Füllfaktor von mehr als 30 Prozent, bevorzugt mehr als 35 Prozent, weiter bevorzugt mehr als 40 Prozent, noch weiter bevorzugt mehr als 45 Prozent, noch weiter bevorzugt mehr als 50 Prozent und noch weiter bevorzugt mehr als 55 Prozent, aufweisen.

10. Verfahren zur Herstellung einer Scroll-Vakuumpumpe gemäß einem der vorstehenden Ansprüche, das Verfahren umfassend
Bewickeln der Statorsegmente (13) mit einem Wickeldraht; Zusammensetzen der bewickelten Statorsegmente (13) zu einem Stator (11); und
Anordnen des zusammengesetzten Stators (11) in einem zylinderförmigen Pumpengehäuse (31) der Scroll-Vakuumpumpe.

11. Verfahren nach Anspruch 10,
wobei der Wickeldraht nach dem Bewickeln der Statorsegmente (13) durch Träufeln und/oder Tauchen und/oder Vergießen an den Statorsegmenten (13) fixiert wird.

12. Verfahren nach Anspruch 10 oder 11,
wobei der Wickeldraht einen Backlackdraht umfasst, wobei jedes der Statorsegmente (13) einzeln mit dem Backlackdraht bewickelt wird, und wobei nach dem Bewickeln der Backlackdraht verbacken wird.

13. Verfahren nach zumindest einem der Ansprüche 10 bis 12,
wobei das Pumpengehäuse (31) vor dem Anordnen des zusammengesetzten Stators (11) in dem Pumpengehäuse (31) erwärmt wird, insbesondere wobei der Stator (11) in dem Pumpengehäuse (31) durch Einschrumpfen montiert wird.

14. Verfahren nach zumindest einem der Ansprüche 10 bis 13,
wobei der zusammengesetzte Stator (11) in einem Metallring (73) positioniert wird, bevor er in dem Pumpengehäuse (31) angeordnet wird, wobei der Metallring (73) auf das Pumpengehäuse (31) aufgesetzt wird und der in dem Metallring (73) positionierte Stator (11) zum Anordnen in dem Pumpengehäuse (31) in das Pumpengehäuse (31) gedrückt wird, insbesondere mittels eines Montagestempels (71).

15. Verfahren nach zumindest einem der Ansprüche 10 bis 14,
wobei der zusammengesetzte Stator (11) zum Anordnen in dem Pumpengehäuse (31) bis zu einer axialen Anschlagposition gedrückt wird, insbesondere bis der Stator (11) an einem an einer Innenseite des Pumpengehäuses (31) ausgebildeten axialen Anschlag anliegt.
